# EUROPEAN PATENT APPLICATION

(11) **EP 1 498 470 A1**
(43) Date of publication of application: **19.01.2005**
(21) Application number: 04014849.6
(22) Date of filing: 24.06.2004
(51) Int. Cl.: C10L 9/10, C10L 10/02, C10L 10/06

(54) **Lowering the amount of carbon in fly ash from burning coal by a manganese additive to the coal**

(30) Priority: 18.07.2003 US 623092
(71) Applicant: ETHYL PETROLEUM ADDITIVES, INC., Richmond, Virginia 23219-4304 (US)
(72) Inventor: Roos, Joseph W., Mechanicsville Virginia 23116 (US); Factor, Stephen A., Richmond Virginia 23233 (US); Davidson, Robert I., Midlothian Virginia 23113 (US)
(74) Representative: Schwabe - Sandmair - Marx

(57) **Abstract**

An additive and a method for reducing carbon and fly ash from the combustion of coal comprise mixing coal and a manganese-containing compound. The manganese compound may be mixed with coal either before or in a combustion chamber. The manganese compound may be an inorganic or organometallic compound. The organometallic compound may include methylcyclopentadienyl manganese tricarbonyl.

## Description

The present invention relates to a method and additive for lowering the amount of carbon in fly ash resulting from the combustion of coal. Specifically, the method and additive relate to the combining of a manganese-containing compound with the coal prior to or during the combustion of the coal.

### Background

Carbon in fly ash results from the incomplete combustion of hydrocarbonaceous fuels including coal. It is desirable to reduce the carbon in ash in order to reduce the overall amount of fly ash emission from a combustion chamber. Also, low carbon fly ash is easier to dispose of and more easily captured than high carbon fly ash by electrostatic precipitators that are often used to control particulate emissions.

In coal furnaces, several methods are known to reduce carbon in fly ash. In one prior solution, the amount of air injected into the combustion chamber is increased. While this method reduces the amount of carbon in fly ash, it typically results in an undesirable increase in NOₓ emissions. It is also known to reduce carbon in fly ash by adding amounts of magnesium or calcium to the coal or in the combustion chamber. The concentration of these metals that must be added in order to be effective is very high. Unfortunately, large amounts of calcium or magnesium can cause other problems in a system such as fouling.

One metal, manganese, is typically present in significant amounts in coal. In some cases, many hundreds of parts per million of manganese is naturally present in coal. However, there is no observed reduction of carbon in ash as a result of this manganese inherent in the coal.

### Summary

The present invention is directed to an additive and a method for reducing the amount of carbon in fly ash resulting from the combustion of coal. The additive includes a manganese-containing compound, including but not limited to inorganic and organometallic manganese compounds. "Manganese-containing compound" and "manganese compound" may be used interchangeably herein.

### Description of the Drawings

Figure 1 depicts carbon in ash amounts over time as a result of introduction of manganese additive.
Figure 2 illustrates manganese in flyash.

### Detailed Description

In one embodiment, a manganese-containing compound is mixed with coal either before or in a combustion chamber. In order to enhance the effectiveness of the manganese as a catalyst to the combustion reaction, the manganese compound that is mixed with the coal must make the manganese available in a mononuclear or small cluster fashion. In this way, more manganese is dispersed on or among the coal (carbon) particles during combustion.

Thus, in an embodiment here is provided a method of lowering the amount of carbon in fly ash resulting from the combustion of coal, the method comprising combining coal and an additive that comprises a manganese-containing compound forming a mixture thereof; and combusting said mixture in a combustion chamber; the manganese compound being present in an amount effective to lower the amount of carbon in fly ash resulting from the combusting of the coal in the combustion chamber.

It is hypothesized that the significant level of manganese that is naturally occurring in coal does not have an appreciable affect in lowering the amount of carbon in fly ash because the manganese is bound together in crystalline or macrocrystalline forms such as with sulfur or phosphorous. Therefore, there is not a significant amount of mononuclear or small cluster manganese atoms available to achieve a dispersion able to surround and catalyze the combustion of coal (carbon) particles. The effect on combustion of naturally occurring manganese, therefore, appears to be negligible.

The term "mononuclear" compound herein includes one where a manganese atom or a small cluster of manganese atoms is bound in a compound which is essentially organo-soluble. An example is an organometallic manganese compound that is soluble in various organic solvents. Compounds having "small clusters" of metal atoms can include for example those with about 2 to about 50 atoms of manganese. In this alternative, the metal atoms are still sufficiently dispersed or dispersable to be an effective catalyst for the combustion reaction. When discussing solubility in terms of mononuclear and small cluster atoms, the term solubility herein means both fully dissolved in the traditional sense, but also partially dissolved or suspended or dispersed in a fluid or liquid medium. As long as the manganese atoms are adequately dispersed in terms of single atoms or up to about 50 atom clusters, the manganese atoms are sufficient to provide a positive catalytic effect for the combustion reaction.

Examples of mononuclear compounds include inorganic and organometallic compounds. Preferred organometallic compounds in an embodiment of the present invention include in their composition organic and inorganic ligands that contain alcohols, aldehydes, ketones, esters, anhydrides, sulfonates, phosphonates, chelates, phenates, naphthenates, crown ethers, carboxylic acids, amides, acetyl acetonates, and mixtures thereof. Manganese containing organometallic compounds include but are not limited to manganese tricarbonyl compounds. Such compounds are taught, for example, in US Patent Nos. 4,568,357; 4,674,447; 5,113,803; 5,599,357; and 5,944,858; and European Patent No. 466 512 B1.

Suitable manganese tricarbonyl compounds which can be used include cyclopentadienyl manganese tricarbonyl, methylcyclopentadienyl manganese tricarbonyl, dimethylcyclopentadienyl manganese tricarbonyl, trimethylcyclopentadienyl manganese tricarbonyl, tetramethylcyclopentadienyl manganese tricarbonyl, pentamethylcyclopentadienyl manganese tricarbonyl, ethylcyclopentadienyl manganese tricarbonyl, diethylcyclopentadienyl manganese tricarbonyl, propylcyclopentadienyl manganese tricarbonyl, isopropylcyclopentadienyl manganese tricarbonyl, tert-butylcyclopentadienyl manganese tricarbonyl, octylcyclopentadienyl manganese tricarbonyl, dodecylcyclopentadienyl manganese tricarbonyl, ethylmethylcyclopentadienyl manganese tricarbonyl, indenyl manganese tricarbonyl, and the like, including mixtures of two or more such compounds. One example is the cyclopentadienyl. manganese tricarbonyls which are liquid at room temperature such as methylcyclopentadienyl manganese tricarbonyl, ethylcyclopentadienyl manganese tricarbonyl, liquid mixtures of cyclopentadienyl manganese tricarbonyl and methylcyclopentadienyl manganese tricarbonyl, mixtures of methylcyclopentadienyl manganese tricarbonyl and ethylcyclopentadienyl manganese tricarbonyl, etc.

Preparation of such compounds is described in the literature, for example, U.S. Pat. No. 2,818,417, the disclosure of which is incorporated herein in its entirety.

Other examples of manganese compounds useful herein are those having small clusters of about 2 to about 50 atoms.

The combustion systems that may use the compound described herein include any and all internal and external combustion devices, machines, engines, turbine engines, boilers, incinerators, evaporative burners, stationary burners and the like which can combust or in which can be combusted a hydrocarbonacous fuel such as coal. Coal burning furnaces, particularly large systems, are all uniquely designed. However, most have primary air streams that deliver coal to and through a grinding process and eventually to the combustion chamber in the furnace. In the furnace, there may be one or more secondary air streams. that also feed air into the combustion chamber.

The manganese compound can according to an embodiment herein be mixed with the coal either before or simultaneously in the combustion chamber. For instance, the manganese compound may be injected into the primary air stream for mixing with the coal before the combustion chamber. Alternatively, the manganese compound may be injected with a secondary air stream into and mixed with the coal in the combustion chamber. Finally, the additive having the manganese compound may be injected separately into the coal and directly into the combustion chamber. In any alternative, there will be conditions that cause the effective mixture of the additive having the manganese compound in the coal so that the manganese atoms will be present and available for catalytic activity. The additive can be a liquid form so that it is miscible with liquid fuels and easily dispersed in the combustion air by atomizing nozzles and mild heat. Alternatively, the manganese-containing additive can be a part of a fluid (but not necessarily liquid) solid or powered material.

The treat rate of the manganese compound with the coal is between about 1 to about 500 ppm manganese by wt based on the amount of coal. An alternative treat rate is from about 5 to about 100 ppm manganese by wt. In a further embodiment, the treat rate is about 20 ppm manganese by wt to the amount of coal.

### Example:

The coals used in this example were analyzed and found to have a manganese content of about 700 ppm wt. To establish a baseline, this coal was burned in the furnace of a large (600 MW) utility power plant unit and both the manganese content and carbon in ash (CIA) of the fly ash were measured at regular intervals. The manganese content of this ash averaged about 500 ppm wt, and the CIA was at about 6 wt%. Then, a manganese-containing additive (Greenburn® 2001HF Combustion Catalyst) was dosed into the combustion air at a treat rate of about 20 ppm manganese by weight. The manganese content of the fly ash was observed to rise from the baseline of about 500 ppm to an average of about 600 ppm wt. At the same time the CIA dropped from the baseline level of about 6 wt% to an average low of about 4.1 wt%. This calculates to a lowering in CIA of about 28%. It is concluded that the manganese in the additive is active towards carbon burnout, but the form that is native to the coal is quite inert.

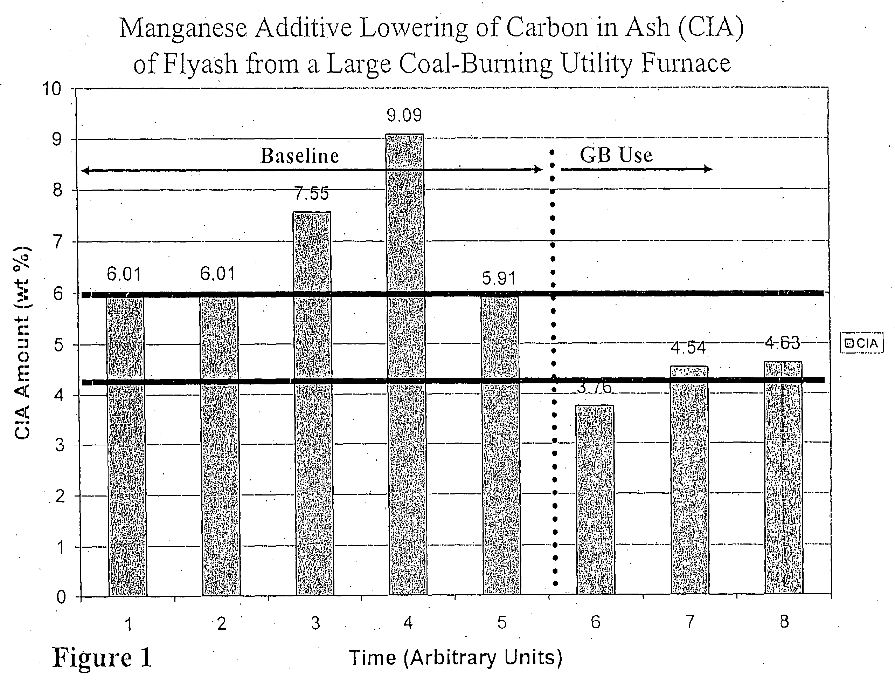

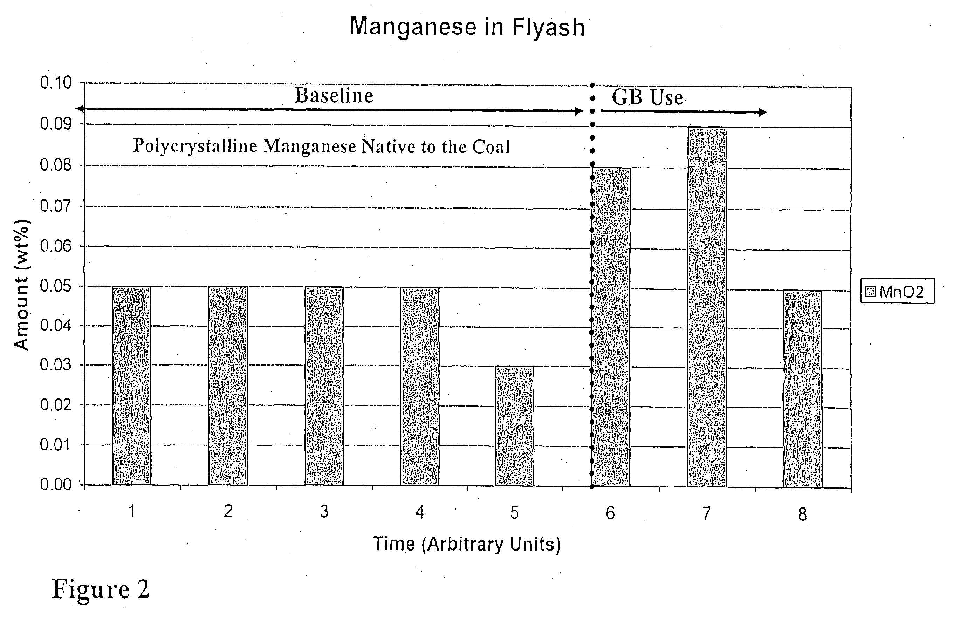

Figure 1 illustrates the benefit of the present invention in the reduction in carbon in ash ("CIA") upon the introduction to the combustion of coal of the manganese-containing additive. Figure 2 illustrates the increased manganese dioxide in the flyash after the introduction to the coal combustion of the manganese-containing additive.

It is to be understood that the reactants and components referred to by chemical name anywhere in the specification or claims herein, whether referred to in the singular or plural, are identified as they exist prior to coming into contact with another substance referred to by chemical name or chemical type (e.g., base fuel, solvent, etc.). It matters not what chemical changes, transformations and/or reactions, if any, take place in the resulting mixture or solution or reaction medium as such changes, transformations and/or reactions are the natural result of bringing the specified reactants and/or components together under the conditions called for pursuant to this disclosure. Thus the reactants and components are identified as ingredients to be brought together either in performing a desired chemical reaction (such as formation of the organometallic compound) or in forming a desired composition (such as an additive concentrate or additized fuel blend). It will also be recognized that the additive components can be added or blended into or with the base fuels individually per se and/or as components used in forming preformed additive combinations and/or sub-combinations. Accordingly, even though the claims hereinafter may refer to substances, components and/or ingredients in the present tense ("comprises", "is", etc.), the reference is to the substance, components or ingredient as it existed at the time just before it was first blended or mixed with one or more other substances, components and/or ingredients in accordance with the present disclosure. The fact that the substance, components or ingredient may have lost its original identity through a chemical reaction or transformation during the course of such blending or mixing operations or immediately thereafter is thus wholly immaterial for an accurate understanding and appreciation of this disclosure and the claims thereof.

At numerous places throughout this specification, reference has been made to a number of U.S. Patents, published foreign patent applications and published technical papers. All such cited documents are expressly incorporated in full into this disclosure as if fully set forth herein.

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims and the equivalents thereof permitted as a matter of law.

Patentee does not intend to dedicate any disclosed embodiments to the public, and to the extent any disclosed modifications or alterations may not literally fall within the scope of the claims, they are considered to be part of the invention under the doctrine of equivalents.

## Claims

1. A method of reducing the amount of carbon in fly ash resulting from the combustion of coal, the method comprising
combining coal and an additive that comprises a manganese-containing compound and forming a mixture thereof; and
combusting said mixture in a combustion chamber;
the manganese-containing compound being present in an amount effective to reduce the amount of carbon in fly ash resulting from the combustion of the coal in the combustion chamber.

2. The method as described in claim 1, wherein the manganese compound is an organometallic compound.

3. The method as described in claim 2, wherein the organo portion of the organometallic compound is derived from a material selected from the group consisting of alcohols, aldehydes, ketones, esters, anhydrides, sulfonates, phosphonates, naphthenates, chelates, phenates, crown ethers, carboxylic acids, amides, acetyl acetonates and mixtures thereof.

4. The method described in claim 2, wherein the manganese compound is selected from the following group: cyclopentadienyl manganese tricarbonyl, methylcyclopentadienyl manganese tricarbonyl, dimethylcyclopentadienyl manganese tricarbonyl, trimethylcyclopentadienyl manganese tricarbonyl, tetramethylcyclopentadienyl manganese tricarbonyl, pentamethylcyclopentadienyl manganese tricarbonyl, ethylcyclopentadienyl manganese tricarbonyl, diethylcyclopentadienyl manganese tricarbonyl, propylcyclopentadienyl manganese tricarbonyl, isopropylcyclopentadienyl manganese tricarbonyl, tert-butylcyclopentadienyl manganese tricarbonyl, octylcyclopentadienyl manganese tricarbonyl, dodecylcyclopentadienyl manganese tricarbonyl, ethylmethylcyclopentadienyl manganese tricarbonyl, indenyl manganese tricarbonyl, and the like, including mixtures of two or more such compounds, and preferably is methylcylopentadienyl manganese tricarbonyl.

5. The method of claim 1, wherein the manganese-containing compound is selected from the group consisting of manganese oxides, manganese sulfates, and manganese phosphates.

6. The method as described in claim 1, wherein the manganese compound is present in an amount sufficient to provide at least about 1 ppm, preferably about 5 to 100 ppm, more preferably about 1 to 500 ppm, and most preferably more about 200 ppm of manganese based on the amount of coal.

7. The method as described in claim 1, wherein the additive is introduced into an air stream that carries the coal into the combustion chamber.

8. The method as described in claim 1, wherein the manganese compound comprises a mononuclear compound.

9. A method of reducing both the amount of carbon in fly ash resulting from the combustion of coal, the method comprising
combusting coal and an additive that comprises a manganese-containing compound in a combustion chamber;
the manganese-containing compound being present in an amount effective to reduce the amount of carbon in fly ash resulting from the combusting of the coal in the combustion chamber, wherein the additive is introduced directly into the combustion chamber separately from the coal.

10. The method as described in claim 9, wherein the additive is introduced into a flue gas recirculation stream.

11. The method as described in claim 9, wherein the additive is introduced into a secondary air stream that is delivered into the combustion chamber.

12. A method according to claim 1 of reducing the amount of carbon in fly ash resulting from the combustion of coal, the method comprising:
combining coal and an additive that comprises a manganese compound to form a mixture thereof;
introducing the mixture of coal and additive into a coal burning combustion chamber;
combusting the mixture in the combustion chamber; and
the manganese compound being present in an amount effective to reduce the amount of carbon in fly ash resulting from the combustion of the coal in the combustion chamber.

13. A coal additive for use in reducing the amount of carbon in the fly ash resulting from the combustion of coal, the additive comprising a manganese compound wherein the manganese compound is added to the coal prior to combustion at a treat rate sufficient to provide the mangnese in an amount of about 1 to 500 ppm, preferably about 5 to 100 ppm and most preferably about 20 ppm of the coal.

14. The use of a manganese-containing additive for reducing the amount of carbon in fly ash resulting from the combustion of coal, the use comprising the combustion of coal in the presence of at least 1 ppm of the additive, based on coal weight, whereby the amount of carbon in fly ash resulting from the combustion of said coal is reduced relative to the amount of carbon in fly ash resulting from the combustion of coal in the absence of the manganese-containing additive.
